# EUROPÄISCHE PATENTSCHRIFT

(11) **EP 3 342 642 B1**
(45) Veröffentlichungstag und Bekanntmachung des Hinweises auf die Patenterteilung: **16.09.2020**
(21) Anmeldenummer: 17208777.7
(22) Anmeldetag: 20.12.2017
(51) Int. Cl.: B60Q 1/26, F21S 43/235

(54) **VERKLEIDUNGSTEIL FÜR EIN KRAFTFAHRZEUG**
CLADDING PART FOR A MOTOR VEHICLE
ÉLÉMENT DE REVÊTEMENT POUR UN VÉHICULE AUTOMOBILE

(30) Priorität: 27.12.2016 DE 202016107396 U
(43) Veröffentlichungstag der Anmeldung: 04.07.2018
(73) Patentinhaber: REHAU AG + Co, 95111 Rehau (DE)
(72) Erfinder: Müller, Claus, 95028 Hof (DE); Löffler, Andreas, 95111 Rehau (DE); Leister, Christian, 95030 Hof (DE)

(56) Entgegenhaltungen:
- EP-A1- 2 746 106
- EP-A2- 2 628 638
- DE-A1-102004 015 544
- DE-A1-102011 112 835
- JP-A- 2012 111 358
- US-A1- 2010 246 198

## Beschreibung

Die vorliegende Erfindung betrifft ein Verkleidungsteil für ein Kraftfahrzeug, umfassend:
- einen Verkleidungsgrundkörper mit einer bei bestimmungsgemäßer Verwendung sichtbaren Außenseite,
- eine Tragstruktur die auf der der Außenseite gegenüberliegenden Rückseite des Verkleidungsgrundkörpers angeordnet ist,
- wenigstens eine lichtemittierende Leuchteinheit, die bei bestimmungsgemäßer Verwendung von dem Verkleidungsgrundkörper verdeckt ist,
wobei der Verkleidungsgrundkörper einen Lichtaustrittsbereich aufweist, der teilweise oder vollständig aus einem, für das von der Leuchteinheit emittierte Licht, transluzenten Material besteht.

Ein Verkleidungsteil gemäß des Standes der Technik kann der WO 2016/102468 A1 entnommen werden. Hierbei wird das emittierte Licht der Leuchteinheit über die gesamte Fläche des Lichtaustrittsbereichs diffus nach außen gestreut. Nachteilig an einem Verkleidungsteil gemäß des Standes der Technik ist, dass die Helligkeit des auf der Außenseite ankommenden Lichts relativ gering ist. Ein gattungsgemäßes Verkleidungsteil kann der Offenlegung DE 10 2004 015 544 A1 entnommen werden.

Aufgabe der vorliegenden Erfindung ist es daher ein Verkleidungsteil für ein Kraftfahrzeug anzugeben, welches das emittierte Licht der Leuchteinheit effizienter zu nutzen vermag.

Diese Aufgabe wird vorliegend erfüllt durch ein Verkleidungsteil für ein Kraftfahrzeug, umfassend:
- einen Verkleidungsgrundkörper mit einer bei bestimmungsgemäßer Verwendung sichtbaren Außenseite,
- eine Tragstruktur die auf der der Außenseite gegenüberliegenden Rückseite des Verkleidungsgrundkörpers angeordnet ist,
- wenigstens eine lichtemittierende Leuchteinheit, die bei bestimmungsgemäßer Verwendung von dem Verkleidungsgrundkörper verdeckt ist,
wobei der Verkleidungsgrundkörper einen Lichtaustrittsbereich aufweist, der teilweise oder vollständig aus einem, für das von der Leuchteinheit emittierte Licht, transluzenten Material besteht,
wobei ein Lichtleitelement vorgesehen ist, das derart mit der Leuchteinheit gekoppelt ist,
dass das von der Leuchteinheit emittierte Licht von einem Lichteinleitungsbereich bis zu einem Lichtausleitungsbereich zumindest teilweise zu dem Lichtaustrittsbereich des Verkleidungsgrundkörpers geleitet wird und durch den Lichtaustrittsbereich auf der Außenseite des Verkleidungsgrundkörpers sichtbar ist.

Der Lichtaustrittbereich ist auf der seiner Außenseite gegenüberliegenden Innenseite mit einem, an den Lichtausleitungsbereich angrenzenden, lichtundurchlässigen Abdeckelement bereichsweise abgedeckt, sodass das emittierte Licht nur durch einen Spalt neben dem Abdeckelement aus dem Lichtaustrittsbereich austreten kann. Das Abdeckelement ist als Teil der Tragstruktur und einstückig mit dieser ausgebildet.

Aufgrund des erfindungsgemäßen Vorsehens eines Lichtleitelementes, welches bis zu dem Lichtaustrittsbereich des Verkleidungsgrundkörpers reicht, kann das emittierte Licht der Leuchteinheit wesentlich effizienter durch den Lichtaustrittsbereich auf die Außenseite austreten.

Das Lichtleitelement kann plattenförmig oder stabförmig ausgebildet sein. Die Leuchteinheit ist bevorzugt mit der Stirnseite oder der Schmalseite des Lichtleitelements gekoppelt, insbesondere kraftschlüssig, formschlüssig und/oder stoffschlüssig gekoppelt.

Die Leuchteinheit ist bevorzugt so mit dem Lichtleitelement gekoppelt, dass das emittierte Licht der Leuchteinheit nahezu vollständig in das Lichtleitelement eintritt.

Das Lichtleitelement kann ein im thermoplastischen Spritzguss hergestelltes und einstückig ausgebildetes Lichtleitelement sein. Das Lichtleitelement kann einstückig zusammen mit dem Verkleidungsgrundkörper, dem Lichtaustrittsbereich oder der Tragstruktur ausgebildet sein.

Die wenigstens eine Leuchteinheit ist bevorzugt eine Leuchtdiode. Besonders bevorzugt umfasst die Leuchteinheit eine Vielzahl von einzelnen Leuchtdioden. Das Lichtleitelement ist bevorzugt diffus streuend ausgebildet, sodass die einzelnen Leuchtdioden an dem Lichtausleitbereich nicht länger ortsauslösbar sind.

Das von der Leuchteinheit emittierte Licht liegt bevorzugt in einem Wellenlängenbereich von 350 nm bis 800 nm.

Die Leuchteinheit kann bevorzugt Licht mit jeweils unterschiedlichen Wellenlängen emittieren. Das heißt, dass die Leuchteinheit in der Lage ist verschiedene Wellenlängen bzw. Farben zu emittieren. Insbesondere kann die Leuchteinheit die Wellenlänge des emittierten Lichts stufenweise, kontinuierlich oder konkret verändern.

Das Verkleidungsteil kann abschnittsweise länglich ausgebildet sein und das Lichtleitelement kann sich über die entsprechende Länge des Verkleidungsgrundkörpers mit erstrecken.

Das transluzente Material des Lichtaustrittsbereichs des Verkleidungsgrundkörpers und/oder das Material des Lichtleitelements kann Polycarbonat oder Polymethylmethacrylat oder Polystyrol umfassen.

Die Fläche des Lichtausleitungsbereichs des Lichtleitelements entspricht bevorzugt maximal 50%, bevorzugt maximal 20%, besonders bevorzugt maximal 10% der Fläche des Lichtaustrittsbereichs.

Der Verkleidungsgrundkörper und/oder die Tragstruktur besteht oder bestehen bevorzugt aus einem polymeren Werkstoff oder umfasst oder umfassen bevorzugt einen polymeren Werkstoff. Der polymere Werkstoff kann Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfassen.

### Das Verkleidungsteil ist ein Spoiler.

Die Erfindung wird anhand nachfolgender Darstellungen näher erläutert. Gleiche oder funktionsgleiche Elemente sind mit den gleichen Bezugszeichen versehen. Es zeigen:
- Fig. 1:: eine Außenansicht eines Verkleidungsteils;
- Fig. 2:: eine Querschnittsdarstellung gemäß der Schnittlinie aus Fig. 1.

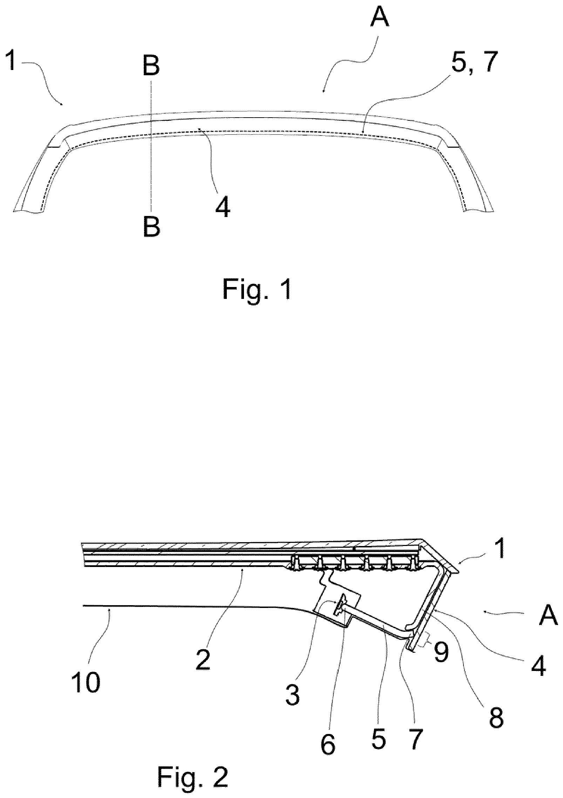

In Fig. 1 ist in einer Außenansicht ein Verkleidungsteil für ein Kraftfahrzeug dargestellt umfassend:
- einen Verkleidungsgrundkörper 1 mit einer bei bestimmungsgemäßer Verwendung sichtbaren Außenseite A,
- eine Tragstruktur 2 die auf der der Außenseite A gegenüberliegenden Rückseite des Verkleidungsgrundkörpers 1 angeordnet ist,
- wenigstens eine lichtemittierende Leuchteinheit 3, die bei bestimmungsgemäßer Verwendung von dem Verkleidungsgrundkörper 1 verdeckt ist,
wobei der Verkleidungsgrundkörper 1 einen Lichtaustrittsbereich 4 aufweist, der teilweise oder vollständig aus einem, für das von der Leuchteinheit 3 emittierte Licht, transluzenten Material besteht.

In der Querschnittsdarstellung gemäß der Schnittlinie B-B in Fig. 1 zeigt die Fig. 2, dass ein Lichtleitelement 5 vorgesehen ist, das derart mit der Leuchteinheit 3 gekoppelt ist, dass das von der Leuchteinheit 3 emittierte Licht von einem Lichteinleitungsbereich 6 bis zu einem Lichtausleitungsbereich 7 zumindest teilweise zu dem Lichtaustrittsbereich 4 des Verkleidungsgrundkörpers 1 geleitet wird und durch den Lichtaustrittsbereich 4 auf der Außenseite A des Verkleidungsgrundkörpers 1 sichtbar ist.

Das Lichtleitelement 5 ist plattenförmig ausgebildet und die Leuchteinheit 3 ist mit der Stirnseite oder der Schmalseite des Lichtleitelements 5 gekoppelt. Das Lichtleitelement 5 ist ein im thermoplastischen Spritzguss hergestelltes und einstückig ausgebildetes Lichtleitelement 5. Bei der wenigstens eine Leuchteinheit 3 handelt es sich um eine Leuchtdiode.

Das von der Leuchteinheit 3 emittierte Licht liegt in einem Wellenlängenbereich von 350 nm bis 800 nm. Die Leuchteinheit 3 kann Licht mit jeweils unterschiedlichen Wellenlängen emittieren.

Das Verkleidungsteil ist abschnittsweise länglich ausgebildet und das Lichtleitelement 5 erstreckt sich über die entsprechende Länge des Verkleidungsgrundkörpers 1 mit (vgl. Fig. 1).

Das transluzente Material des Lichtaustrittsbereichs 4 des Verkleidungsgrundkörpers 1 und/oder das Material des Lichtleitelements 5 kann Polycarbonat oder Polymethylmethacrylat oder Polystyrol umfassen. Die Fläche des Lichtausleitungsbereichs 7 des Lichtleitelements 5 entspricht maximal 10% der Fläche des Lichtaustrittsbereichs.

In Fig. 2 ist gut zu erkennen, dass der Lichtaustrittbereich 4 auf der seiner Außenseite A gegenüberliegenden Innenseite mit einem, an den Lichtausleitungsbereich 7 angrenzenden, lichtundurchlässigen Abdeckelement 8 bereichsweise abgedeckt ist, sodass das emittierte Licht nur durch einen Spalt 9 neben dem Abdeckelement 8 aus dem Lichtaustrittsbereich 4 austreten kann. Das Abdeckelement ist erfindungsgemäß Teil der Tragstruktur 2 und ist einstückig mit dieser ausgebildet.

## Patentansprüche

1. Verkleidungsteil für ein Kraftfahrzeug, umfassend:
- einen Verkleidungsgrundkörper (1) mit einer bei bestimmungsgemäßer Verwendung sichtbaren Außenseite (A),
- eine Tragstruktur (2) die auf der der Außenseite (A) gegenüberliegenden Rückseite des Verkleidungsgrundkörpers (1) angeordnet ist,
- wenigstens eine lichtemittierende Leuchteinheit (3), die bei bestimmungsgemäßer Verwendung von dem Verkleidungsgrundkörper (1) verdeckt ist,
wobei der Verkleidungsgrundkörper (1) einen Lichtaustrittsbereich (4) aufweist, der teilweise oder vollständig aus einem, für das von der Leuchteinheit (3) emittierte Licht, transluzenten Material besteht,
wobei das Verkleidungsteil ein Spoiler ist,
wobei ein Lichtleitelement (5) vorgesehen ist, das derart mit der Leuchteinheit (3) gekoppelt ist, dass das von der Leuchteinheit (3) emittierte Licht von einem Lichteinleitungsbereich (6) bis zu einem Lichtausleitungsbereich (7) zumindest teilweise zu dem Lichtaustrittsbereich (4) des Verkleidungsgrundkörpers (1) geleitet wird und durch den Lichtaustrittsbereich (4) auf der Außenseite (A) des Verkleidungsgrundkörpers (1) sichtbar ist,
**dadurch gekennzeichnet, dass**
der Lichtaustrittbereich (4) auf der seiner Außenseite (A) gegenüberliegenden Innenseite mit einem, an den Lichtausleitungsbereich (7) angrenzenden, lichtundurchlässigen Abdeckelement (8) bereichsweise abgedeckt ist, sodass das emittierte Licht nur durch einen Spalt (9) neben dem Abdeckelement (8) aus dem Lichtaustrittsbereich (4) austreten kann, wobei das Abdeckelement als Teil der Tragstruktur und einstückig mit dieser ausgebildet ist.

2. Verkleidungsteil nach Anspruch 1, **dadurch gekennzeichnet, dass** das Lichtleitelement (5) plattenförmig oder stabförmig ausgebildet ist und die Leuchteinheit (3) mit der Stirnseite oder der Schmalseite des Lichtleitelements (5) gekoppelt ist.

3. Verkleidungsteil nach einem der vorstehenden Ansprüche, **dadurch gekennzeichnet, dass** das Lichtleitelement (5) ein im thermoplastischen Spritzguss hergestelltes und einstückig ausgebildetes Lichtleitelement (5) ist.

4. Verkleidungsteil nach einem der vorstehenden Ansprüche, **dadurch gekennzeichnet, dass** die wenigstens eine Leuchteinheit (3) eine Leuchtdiode ist.

5. Verkleidungsteil nach einem der vorstehenden Ansprüche, **dadurch gekennzeichnet, dass** das von der Leuchteinheit (3) emittierte Licht in einem Wellenlängenbereich von 350 nm bis 800 nm liegt.

6. Verkleidungsteil nach Anspruch 5, **dadurch gekennzeichnet, dass** die Leuchteinheit (3) Licht mit jeweils unterschiedlichen Wellenlängen emittieren kann.

7. Verkleidungsteil nach einem der vorstehenden Ansprüche, **dadurch gekennzeichnet, dass** das Verkleidungsteil abschnittsweise länglich ausgebildet ist und das Lichtleitelement (5) sich über die entsprechende Länge des Verkleidungsgrundkörpers (1) mit erstreckt.

8. Verkleidungsteil nach einem der vorstehenden Ansprüche, **dadurch gekennzeichnet, dass** das transluzente Material des Lichtaustrittsbereichs (4) des Verkleidungsgrundkörpers (1) und/oder das Material des Lichtleitelements (5) Polycarbonat oder Polymethylmethacrylat oder Polystyrol umfasst.

9. Verkleidungsteil nach einem der vorstehenden Ansprüche, **dadurch gekennzeichnet, dass** die Fläche des Lichtausleitungsbereichs (7) des Lichtleitelements (5) maximal 50%, bevorzugt maximal 20%, besonders bevorzugt maximal 10% der Fläche des Lichtaustrittsbereichs (4) entspricht.

## Claims

1. A cladding part for a motor vehicle, comprising:
- a cladding base member (1) with an outside (A) that is visible when used for the intended purpose,
- a support structure (2), which is arranged on the back of the cladding base member (1) opposite to the outside (A),
- at least one light-emitting lighting unit (3), which is concealed by the cladding base member (1) when used for the intended purpose,
wherein the cladding base member (1) has a light exit region (4) which consists partially or completely of a material that is translucent for the light emitted by the lighting unit (3),
wherein the cladding part is a spoiler,
wherein a light-guiding element (5) is provided, which is coupled to the lighting unit (3) in such a way that the light emitted by the lighting unit (3) is guided from a light input region (6) up to a light output region (7) at least in part to the light exit region (4) of the cladding base member (1) and is visible on the outside (A) of the cladding base member (1) through the light exit region (4),
**characterised in that**
the light exit region (4) is partly covered on the inside opposite to the outside (A) thereof with a non-transparent covering element (8) adjacent to the light output region (7), so that the emitted light can only exit from the light exit region (4) through a gap (9) next to the covering element (8), wherein the covering element is formed as part of the support structure and in one piece therewith.

2. The cladding part according to claim 1, **characterised in that** the light-guiding element (5) is formed in a panel shape or rod shape, and the lighting unit (3) is coupled to the end face or the narrow side of the light-guiding element (5).

3. The cladding part according to one of the preceding claims, **characterised in that** the light-guiding element (5) is a light-guiding element (5) that has been produced by thermoplastic injection moulding and formed in one piece.

4. The cladding part according to one of the preceding claims, **characterised in that** the at least one lighting unit (3) is an LED.

5. The cladding part according to one of the preceding claims, **characterised in that** the light emitted by the lighting unit (3) is in a wavelength range of 350 nm to 800 nm.

6. The cladding part according to claim 5, **characterised in that** the lighting unit (3) can emit light with different wavelengths in each case.

7. The cladding part according to one of the preceding claims, **characterised in that** the cladding part is sectionally of elongated configuration and the light-guiding element (5) extends over the corresponding length of the cladding base member (1).

8. The cladding part according to one of the preceding claims, **characterised in that** the translucent material of the light exit region (4) of the cladding base member (1) and/or the material of the light-guiding element (5) comprises polycarbonate or polymethyl methacrylate or polystyrene.

9. The cladding part according to one of the preceding claims, **characterised in that** the area of the light output region (7) of the light-guiding element (5) corresponds to no more than 50%, preferably no more than 20% and particularly preferably no more than 10% of the area of the light exit region (4).

## Revendications

1. Partie d'habillage pour un véhicule automobile, comprenant :
- un corps de base d'habillage (1) avec un côté extérieur (A) visible lors d'une utilisation conforme à l'usage prévu,
- une structure porteuse (2), qui est disposée sur le côté arrière, faisant face au côté extérieur (A), du corps de base d'habillage (1),
- au moins une unité d'éclairage (3) d'émission de lumière, qui est dissimulée par le corps de base d'habillage (1) lors d'une utilisation conforme à l'usage prévu,
dans laquelle le corps de base d'habillage (1) présente une zone de sortie de lumière (4), qui est constituée en partie ou en totalité d'un matériau translucide à la lumière émise par l'unité d'éclairage (3),
dans laquelle la partie d'habillage est un déflecteur,
dans laquelle est prévu un élément de guidage de lumière (5), qui est couplé de telle manière à l'unité d'éclairage (3) que la lumière émise par l'unité d'éclairage (3) est guidée depuis une zone d'introduction de lumière (6) jusqu'à une zone d'évacuation de lumière (7) au moins en partie en direction de la zone de sortie de lumière (4) du corps de base d'habillage (1) et est visible à travers la zone de sortie de lumière (4) sur le côté extérieur (A) du corps de base d'habillage (1),
**caractérisée en ce que**
la zone de sortie de lumière (4) est recouverte par endroits, sur le côté intérieur faisant face au côté extérieur (A), avec un élément de recouvrement (8) ne laissant pas passer la lumière, jouxtant la zone d'évacuation de lumière (7) si bien que la lumière émise peut sortir de la zone de sortie de lumière (4) seulement par une fente (9) à côté de l'élément de recouvrement (8), dans laquelle l'élément de recouvrement est réalisé en tant que partie de la structure porteuse et d'un seul tenant avec celle-ci.

2. Partie d'habillage selon la revendication 1, **caractérisée en ce que** l'élément de guidage de lumière (5) est réalisé en forme de plaque ou en forme de barre et l'unité d'éclairage (3) est couplée au côté frontal ou au côté étroit de l'élément de guidage de lumière (5).

3. Partie d'habillage selon l'une quelconque des revendications précédentes, **caractérisée en ce que** l'élément de guidage de lumière (5) est un élément de guidage de lumière (5) fabriqué lors du moulage par injection thermoplastique et réalisé d'un seul tenant.

4. Partie d'habillage selon l'une quelconque des revendications précédentes, **caractérisée en ce que** l'au moins une unité d'éclairage (3) est une diode électroluminescente.

5. Partie d'habillage selon l'une quelconque des revendications précédentes, **caractérisée en ce que** la lumière émise par l'unité d'éclairage (3) se situe dans une plage de longueurs d'onde de 350 nm à 800 nm.

6. Partie d'habillage selon la revendication 5, **caractérisée en ce que** l'unité d'éclairage (3) peut émettre de la lumière avec des longueurs d'onde respectivement différentes.

7. Partie d'habillage selon l'une quelconque des revendications précédentes, **caractérisée en ce que** la partie d'habillage est réalisée de manière allongée par endroits et l'élément de guidage de lumière (5) s'étend sur la longueur correspondante du corps de base d'habillage (1).

8. Partie d'habillage selon l'une quelconque des revendications précédentes, **caractérisée en ce que** le matériau translucide de la zone de sortie de lumière (4) du corps de base d'habillage (1) et/ou le matériau de l'élément de guidage de lumière (5) comprennent du polycarbonate ou du polyméthacrylate de méthyle ou du polystyrène.

9. Partie d'habillage selon l'une quelconque des revendications précédentes, **caractérisée en ce que** la surface de la zone d'évacuation de lumière (7) de l'élément de guidage de lumière (5) correspond à 50 % au maximum, de manière préférée à 20 % au maximum, de manière particulièrement préférée à 10 % au maximum de la surface de la zone de sortie de lumière (4).
